(19) Europäisches Patentamt
European Patent Office
Office européen des brevets

(11) **EP 0 708 521 B1**

(12) **EUROPÄISCHE PATENTSCHRIFT**

(45) Veröffentlichungstag und Bekanntmachung des Hinweises auf die Patenterteilung:
**28.10.1998 Patentblatt 1998/44**

(51) Int Cl.$^6$: **H02P 6/00**

(21) Anmeldenummer: **95115328.7**

(22) Anmeldetag: **27.09.1995**

(54) **Verfahren und Vorrichtung zur Steuerung eines Elektromotors**

Method and apparatus for the control of an electromotor

Procédé et appareil pour la commande d'un moteur électrique

(84) Benannte Vertragsstaaten:
**CH DE FR GB IT LI**

(30) Priorität: **21.10.1994 DE 4437793**

(43) Veröffentlichungstag der Anmeldung:
**24.04.1996 Patentblatt 1996/17**

(73) Patentinhaber: **AGIE SA**
**6616 Losone (CH)**

(72) Erfinder: **Monleone, Riccardo, Ing.**
**CH-6962 Viganello (CH)**

(74) Vertreter: **Turi, Michael, Dipl.-Phys. et al**
**Samson & Partner**
**Widenmayerstrasse 5**
**80538 München (DE)**

(56) Entgegenhaltungen:
**EP-A- 0 073 503          DE-A- 3 812 638**
**US-A- 4 743 815**

## Beschreibung

Die Erfindung befaßt sich mit der Steuerung eines Elektromotors, insbesondere eines bürstenlosen Elektromotors, wobei die absolute Phasenlage eines Rotors relativ zu einem Stator des Elektromotors bestimmt wird. Ein Verfahren und eine Vorrichtung mit jeweils den Merkmalen der Oberbegriffe der Ansprüche 1 and 15 sind aus dem Dokument US-A-4743815 bekannt.

Im nachfolgenden soll unter den Begriffen "Rotor" und "Stator" nur die funktionsmäßige Bezeichnung der Grundelemente eines Elektromotors gemeint sein, welche sich entweder relativ zu einem äußeren Koordinatensystem in der Lage verändern (drehen oder verschieben) - der Rotor - oder bezüglich des äußeren Koordinatensystems fixiert sind - der Stator.

Gerade beim Starten des Elektromotors ist es wünschenswert, die genaue Winkelposition bzw. Phasenlage des Rotors relativ zum jeweils dazugehörigen Stator zu kennen, um ein geeignetes Drehmoment auf den Rotor erzeugen zu können. Bei bekannten Verfahren oder Vorrichtungen erhält man diese Information über eine absolute Positionsmessung. Dabei ist ein Absolutmeßsystem zum Beispiel auf einer Welle des Rotors, auf welcher der Rotor sitzt, angebracht. Das Absolutmeßsystem gibt zu jedem Zeitpunkt die genaue Winkellage des Rotors zum Stator an.

Als Absolutmeßsysteme werden vielfach sogenannte Resolver oder Hall-Sensoren eingesetzt. Die Resolver sind z.B. Induktionsmesser oder drehbare Transformatoren. Beim Hall-Sensor handelt es sich in der Regel um drei um die Achswelle in 120°-Schritten versetzt angebrachte Sensoren.

Solche Absolutmeßsysteme sind dabei so am Elektromotor angebracht, daß sie in allen Betriebszuständen - selbst bei ausgeschalteter Elektromotorsteuerung - ständig die absolute Phasenlage des Rotors zum Stator angeben können. Für ihre Ansteuerung und Realisierung sind allerdings aufwendige und damit kostenintensive elektronische Schaltungen notwendig.

Insbesondere bei Synchronmotoren mit Bürsten bzw. Bürstenklemmen ist ein Steuerungsverfahren bekannt, bei dem die absolute Phasenlage aus der Phasenlage der induzierten Sinusspannung an den Motorklemmen bestimmt wird. Dieses Verfahren hat aber zum Nachteil, daß es nur während der Drehung des Rotors - also im Betrieb des Elektromotors - funktioniert.

Häufig dürfen sich Elektromotoren aber - z.B. beim Einschalten der Energieversorgung - nicht oder nur sehr wenig bewegen. Zum Beispiel ist es bei Vorrichtungen zur elektroerosiven Bearbeitung von Werkstücken, bei denen Elektromotoren die Bewegung des Bearbeitungstisches und/oder der Elektrodenführung(en) steuern, besonders wichtig, mit dem Einschalten des Elektromotors einerseits die genaue Phasenlage des Rotors zum Stator zu kennen und andererseits unkontrollierte Drehungen des Rotors während dieser Einschaltphase möglichst zu vermeiden. Diese Anforderungen werden vor allem dann verständlich, wenn man bedenkt, mit welch hoher Präzision bei derartigen Vorrichtungen gearbeitet wird. Steuern die Elektromotoren zum Beispiel die Führungsköpfe für die Elektroden bzw. den Schneidedraht, so können bereits ungewollte Bewegungen im Bereich von Mikrometern die Qualität der Werkstücksbearbeitung beträchtlich negativ beeinflussen. Unkontrollierte Bewegungen des Elektromotors können sogar bishin zur Beschädigung der mechanischen Einheit (Führungskopf) oder der zu bearbeitenden Werkstücke führen.

Die Erfindung zielt darauf ab, ein Verfahren und eine Vorrichtung zur Steuerung von Elektromotoren, insbesondere bürstenlosen Elektromotoren, zu schaffen, welche die absolute Phasenlagenbestimmung vereinfachen.

Die Erfindung erreicht dieses Ziel durch ein Verfahren nach Anspruch 1 und eine Vorrichtung nach Anspruch 15. Im nachfolgenden soll die Größe der anzuregenden Bewegungen so klein ausgewählt werden, daß die obengenannten Probleme - zu große ungewollte Bewegungen des Rotors in der Startphase - nicht auftreten. Bevorzugt kann die Größe der anzuregenden Bewegungen aber auch ohne Rücksicht auf eventuelle unerwünschte Rotorbewegungen ausgewählt werden.

Der Vorteil der Erfindung besteht darin, daß ein bereits vorhandenes Meßsystem zum Messen von Phasenlagenänderungen des Rotors relativ zum Stator verwendet und damit der gesamte Aufbau wesentlich vereinfacht und aufgrund der Verringerung der Anzahl an Bauteilen kostengünstiger gestaltet werden kann. Dieses Meßsystem findet man bevorzugt in bürstenlosen Elektromotoren, wo es der Steuerung bzw. Kontrolle dient. Ein weiterer Vorteil der Erfindung ist, daß man bei der Bestimmung der absoluten Phasenlage nach dem erfindungsgemäßen Verfahren weder die Information über den momentan beaufschlagten Strom noch die Information über die momentan induzierte Spannung z.B. an den Klemmen eines Elektromotors benötigt.

Bürstenlose Elektromotoren setzt man seit längerem verstärkt ein, da sie sich durch ihre Kompaktheit, Zuverlässigkeit, ihren einfachen Aufbau und ihre exzellenten dynamischen Eigenschaften auszeichnen.

Man unterscheidet im wesentlichen zwischen zwei verschiedenen Arten von bürstenlosen Elektromotoren, je nach Wellenform des Erregerstroms bzw. der induzierten Spannung. Der Erregerstrom kann z.B. einen trapez- oder einen sinusförmigen Verlauf haben.

Bürstenlose Elektromotoren, die mit einem trapezförmigen Erregerstrom angeregt werden, sind hinsichtlich ihres elektronischen Schaltungsaufbaus kostengünstiger als bürstenlose Elektromotoren, die mit einem sinusförmigen Erregerstrom angeregt werden, da die elektrische 360°-Periode grob genähert in sechs Abschnitte - sechs Sextanten - aufgeteilt werden kann. Innerhalb jedes Sextanten wird die Spannung bzw. der Strom nur zwischen zwei der drei Anschlußpunkte eingespeist und gesteuert. Innerhalb eines Sextanten entspricht der bürstenlose Elektromotor mit beaufschlagtem trapezförmigen Erregerstrom im Prinzip einem normalen Gleichstrommotor, da der beaufschlagte Stromverlauf in diesem Bereich im wesentlichen konstant ist.

Beim bürstenlosen Elektromotor, der mit einem sinusförmigen Erregerstrom angeregt wird, sind im Falle eines beaufschlagten Drehstroms immer alle drei Phasen aktiv, so daß dieser bürstenlose Elektromotor im Prinzip einem (Synchron)-Wechselstrommotor mit Permanentmagnet-Rotor entspricht.

Das og. Meßsystem im Elektromotor, oder speziell im bürstenlosen Elektromotor, erfaßt im wesentlichen nur eine Winkeländerung (bzw. einen Längenzuwachs bei Linearmotoren). Die gemessenen Werte für die Winkel- bzw. Längenänderungen werden an eine an den Elektromotor angeschlossene Steuereinrichtung weitergeleitet. Mit diesen Werten leitet die Steuereinrichtung Reaktionen des Elektromotors auf eine zuvor von der Steuereinrichtung beaufschlagte Spannung bzw. einen Strom ab. Die Steuerung berücksichtigt diese Reaktion bei der Wahl des nächsten Spannungs- bzw. Stromimpulses (oder -vektors) und verhindert damit ein unkontrolliertes Ausbrechen oder einen sogenannten Schlupf der Rotorbewegung während der Betriebsphase.

Erfindungsgemäß wird nun dieses zuvor erwähnte Meßsystem zusätzlich ausgenutzt, um mit Hilfe einer ausgeklügelten Auswerte- und Erregereinrichtung ebenfalls die absolute Phasenlage zu bestimmen - z.B. nach Einschalten der Energieversorgung.

Bekannte Resolver, die zur absoluten Phasenlagenbestimmung häufig in bürstenlosen Elektromotoren mit beaufschlagtem sinusförmigen Erregerstromverlauf eingesetzt werden, können diese Funktionen - die Ableitung einer Phasenlagenänderung aus Absolutmeßwerten - prinzipiell zwar ebenso übernehmen, sind aber gegenüber og. Meßeinrichtungen stark benachteiligt, welche vom Meßprinzip her ausschließlich eine Phasenlagenänderung erfassen. Die Auflösung og. Resolver ist nämlich häufig nur auf einige Winkelminuten beschränkt. Ferner ist die elektronische Weiterverarbeitung des Resolversignals mit einem extrem teueren elektronischen Aufwand verbunden und liefert in der Regel nur einen schlechten Signal-zu-Rauschabstand und damit einhergehend eine schlechte abgeleitete Geschwindigkeitsinformation bei niederen Geschwindigkeiten des Rotors. Daher eignen sich Resolver in der Regel nicht für die vorzunehmenden Geschwindigkeitsmessungen des Rotors in einem Elektromotor.

Im nachfolgenden wird in der Beschreibung nur noch auf erfindungsgemäße Ausführungsbeispiele mit einem bürstenlosen Elektromotor eingegangen statt allgemein auf Elektromotoren. Dies ist aber nicht einschränkend zu verstehen, sondern dient nur einer einheitlichen Terminologie.

In einer bevorzugten erfindungsgemäßen Ausführungsform wird der Elektromotor von einer Positions- und Geschwindigkeitsregelung angeregt (Anspruch 2). In der entsprechenden Vorrichtung umfaßt die Erregereinrichtung eine Positions- und Geschwindigkeitsregelung (Anspruch 15). Damit ist die erfindungsgemäße Vorrichtung zur absoluten Phasenlagenbestimmung der bekannten Positions- und Geschwindigkeitsregelung übergeordnet und greift somit auf dieselbe Erregereinrichtung zurück. Schaltungstechnisch wird damit der zur Implementierung der erfindungsgemäßen Vorrichtung aufzubringende Aufwand deutlich verringert. Das erfindungsgemäße Verfahren läuft also prinzipiell parallel zu der bereits bestehenden Positions- und Geschwindigkeitsregelungsvorrichtung des bürstenlosen Elektromotors.

Bevorzugt wird der erfindungsgemäße Elektromotor mit einem sinusförmigen oder trapezförmigen Stromverlauf angeregt (Anspruch 3). Der erfindungsgemäße Elektromotor kann dabei bevorzugt ein bürstenloser Elektromotor, in welchem das Rotormagnetfeld durch einen Permanentmagneten erzeugt wird, oder ein Synchron-Wechselstrommotor sein, in welchem das Rotormagnetfeld durch einen Elektromagneten erzeugt wird. Im Falle der sinusförmigen Erregung ist es wichtig, die genaue Position des Rotors gegenüber dem Stator zu kennen, da das gewünschte Drehmoment auf den Rotor in die gewünschte Richtung nur dann erzeugt werden kann, wenn sich der Phasenwinkel des beaufschlagten Stromes in einer bestimmten Beziehung zu der Phasenlage des Magnetfeldes des Rotors befindet, zum Beispiel 90° voraus. Dieses Problem tritt zwar auch im Falle einer trapezförmigen Erregung auf, allerdings ist es hier ausreichend zu wissen, in welchem der sechs Sextanten sich der Rotor befindet. Für bürstenlose Elektromotoren mit beaufschlagtem trapezförmigen Erregerstromverlauf ist daher bereits ein sehr grobes Phasenlagenbestimmungsverfahren ausreichend, um bereits eine vollständige Kontrolle über den Elektromotor zu erhalten.

Im nachfolgenden wird hinsichtlich der erfindungsgemäßen Vorrichtung (bzw. dem Verfahren) zur Bestimmung der absoluten Phasenlage bevorzugt nur noch auf Ausführungsbeispiele, die einen bürstenlosen Elektromotor mit einem beaufschlagten sinusförmigen Erregerstromverlauf aufweisen, näher eingegangen. Diese Ausführungsbeispiele enthalten nämlich die anderen Ausführungsbeispiele, die einen bürstenlosen Elektromotor mit beaufschlagtem trapezförmigen Erregerstromverlauf aufweisen, bereits als vereinfachte Ausführungsformen mit.

In einer weiteren bevorzugten Ausführungsform wird die Phasenlagenänderung mit Hilfe eines inkrementalen, optischen Meßsystems gemessen (Anspruch 4 und 15). Optische Meßsysteme zeichnen sich meist durch ein besonders hohes Auflösungsvermögen aus. Weist das optische Meßsystem z.B. einen Laser auf, so ist eine Auflösung von 100 000 Winkelstellungen innerhalb einer vollständigen Rotorumdrehung möglich.

In einer besonders bevorzugten erfindungsgemäßen Ausführungsform erfolgt die Phasenlagenbestimmung nach einem groben und einem feinen Bestimmungsverfahren, wobei beim groben Verfahren der Rotor in einem vorgegebenen Phasenlagenbereich gehalten wird, insbesondere auf einem bestimmten Phasenlagenwert (ggf. auch dann, wenn der Elektromotor mit einer statischen Last, z.B auf die z-Achse, belastet wird) und beim feinen Verfahren die genaue absolute Phasenlage bestimmt wird (Anspruch 5). Der Vorteil der Aufspaltung des Phasenlagen-Bestimmungsverfahrens in zwei separate Bestimmungsverfahren besteht darin, aus einer anfänglichen inkrementalen Phasenlageninformation des Meßsystems schnell eine akzeptable Näherung der Rotorposition während der Startphase des Bestimmungsverfahrens zu gewinnen und dabei Rotorbewegungen möglichst zu vermeiden und anschließend die Näherung der Rotorposition beliebig zu verfeinern. Das grobe Verfahren liefert hierbei bevorzugt die Näherung der absoluten Phasenlage während der Startphase, die bereits ausreicht, den bürstenlosen Elektromotor in die gewünschte Richtung zu bewegen bzw. zu steuern. Es stellt bevorzugt zusätzliche Sicherheitsmechanismen bereit, die den bürstenlosen Elektromotor stabil gegen den Einfluß dynamischer Eigenschaften der Motorlasten hält. Das gesamte Phasenlagenbestimmungsverfahren funktioniert also ebensogut für Anwendungen mit einer statischen Last auf den bürstenlosen Elektromotor, wenn dieser z.B. zum Bewegen vertikaler Achsen einer Werkzeugmaschine eingesetzt wird, ebenso wie für Anwendungen ohne diese Lasten. Die von dem groben Bestimmungsverfahren gefundene absolute Phasenlage ist in der Regel mit einem Fehler kleiner oder gleich 90° behaftet. Daraus resultiert auch in ungünstigen Fällen eine schlechte Drehmomentreserve, d.h., die dynamischen Eigenschaften des Elektromotors sind nur unzureichend. Zur Beseitigung dieser Mängel dient das feine Bestimmungsverfahren. Dieses verbessert wiederholt in nachfolgenden Iterationsschritten den Näherungswert für die absolute Phasenlage. Dieses feine Bestimmungsverfahren allein reicht jedoch nicht aus, den bürstenlosen Elektromotor unter Kontrolle zu halten. Dies gilt besonders für die ersten Iterationsschritte, bei denen die absolute Phasenlage noch nicht zufriedenstellend gewählt bzw. ermittelt ist. Bevorzugt arbeiten diese beiden Bestimmungsverfahren parallel zu der bekannten Elektromotorsteuerung.

Bevorzugt wird die absolute Phasenlage beim feinen Bestimmungsverfahren über ein binäres Suchverfahren bestimmt (Anspruch 6). Mit diesem Suchverfahren werden ausgehend von einem Näherungswert eines zu beaufschlagenden Phasenwinkels alle nachfolgenden Werte der zukünftig zu beaufschlagenden Phasenwinkel dadurch ermittelt, daß der nachfolgende Wert bezüglich des bisherigen Wertes immer halbiert wird. Anschließend wird dann jeweils die Phasenlagenänderung gemessen und der gemessene Wert der Bestimmung der absoluten Phasenlage zugrundegelegt. Dieses binäre Suchverfahren bestimmt besonders effektiv und schnell den absoluten Phasenwinkel.

In einer bevorzugten Ausführungsform laufen zu Beginn der Phasenlagenbestimmung beide Verfahren so lange, bis der Rotor einen vorgegebenen Phasenlagenbereich einnimmt, insbesondere einen Phasenlagenwert, und sodann werden beim groben Verfahren nur noch Motorausbrüche überwacht (Anspruch 7). Beim groben Bestimmungsverfahren wird also ein konstanter Offsetwert bestimmt, welcher, zu der inkrementalen Rotorpositionsinformation addiert, einen bestimmten Phasenwinkel liefert. Mit dieser Information wird sodann ein auf die drei Phasen verteilter Strom erzeugt, mit dem der bürstenlose Elektromotor ein geeignetes Drehmoment entwickeln kann. Sobald eine geeignete Näherung für den Offsetwert gefunden ist, wird diese vom groben Verfahren so lange konstant gehalten, bis auch das feine Bestimmungsverfahren zum Abschluß gekommen ist. Anschließend wird der Offset-Wert mit dem vom feinen Bestimmungsverfahren gefundenen Wert korrigiert. Während der gesamten Ablaufzeit des feinen Verfahrens überwacht das grobe Verfahren nur eventuell auftretende, unerwünschte Motorbewegungen bzw. Ausbrüche und schaltet sich nur dann ein, wenn diese Ausbrüche einen bestimmten vorgegebenen Wert überschreiten bzw. aus einem vorgegebenen Bereich herauslaufen.

Somit laufen beide Bestimmungsverfahren zu Beginn der Phasenlagenbestimmung gleichzeitig - sozusagen parallel. Sobald der bürstenlose Elektromotor unter Kontrolle ist, stellt das grobe Bestimmungsverfahren seine Hauptfunktion ein und überwacht nur noch eventuell auftretende Motorausbrüche. Ab diesem Zeitpunkt arbeitet also in erster Linie nur noch das feine Bestimmungsverfahren, bis auch dieses abgeschlossen hat. Mit all diesen Maßnahmen erhält man ein besonders effektives, schnelles und sicheres Verfahren zur Bestimmung der absoluten Phasenlage.

Bevorzugt wird beim groben Verfahren der Betrag der zu anzuregenden Bewegung des Rotors in Abhängigkeit der gemessenen Ausbruchgeschwindigkeit oder -beschleunigung des Rotors im Elektromotor gewählt (Anspruch 8). Wird beim Überwachen der Motorausbrüche vom groben Verfahren festgestellt, daß der Rotor eine unerwünschte Bewegung ausführt, so korrigiert er die derzeit gefundene Phasenlage um einen Betrag, der bevorzugt proportional zu der Ausbruchgeschwindigkeit des Rotors ist, d.h. der Geschwindigkeit, mit welcher der Rotor sich unerwünschterweise aus einem vorgegebenen Phasenlagenbereich hinausbewegt. Bevorzugt kann das grobe Verfahren die derzeit gefundene Phasenlage auch um einen Wert korrigieren, der proportional zur Beschleunigung des Rotors ist oder gleich einer Konstanten, deren Vorzeichen von der Ausbruchgeschwindigkeit abhängt. Besonders bevorzugt ist auch jegliche Kombination der drei verschiedenen genannten Korrekturarten einsetzbar.

Sobald der Rotor sich wieder innerhalb eines bestimmten Phasenlagenbereichs um seine Startposition herum befindet oder einen vorgegebenen Phasenlagenwert eingenommen hat, hält das grobe Bestimmungsverfahren den letztgefundenen Näherungswert der Phasenlage konstant und schaltet wieder auf ein passives Überwachen zurück. Damit hat das grobe Bestimmungsverfahren seine Hauptfunktion erfüllt und übt von nun an wieder die Überwachungsfunktion aus, bis der bürstenlose Elektromotor erneut ausbricht. Ist dies erneut der Fall, so sucht das grobe Bestimmungsverfahren eine noch bessere Näherung für die absolute Phasenlage, wobei es wiederum den bisherigen Wert der Phasenlage um einen Wert z.B. bevorzugt proportional zur Ausbruchgeschwindigkeit korrigiert. Mit dieser Maßnahme ist ein besonders stabiles Sicherheitssystem gegeben, welches den bürstenlosen Elektromotor in "Störfällen" schnell und sicher unter Kontrolle bringt. Somit ist der bürstenlose Elektromotor sowohl gegen äußere Einflüsse als auch gegen intern bei der Phasenlagenbestimmung auftretende Probleme geschützt. Ändert sich z.B. während der Zeit, da das Bestimmungsverfahren läuft, die äußere Last auf den bürstenlosen Elektromotor, so schaltet sich automatisch das grobe Bestimmungsverfahren ein und versucht, der äußeren Last entgegenzuwirken.

In einer weiteren bevorzugten Ausführungsform wird während des feinen Verfahrens der Elektromotor ständig mit einem Strom von der Positions- und Geschwindigkeitsregelung versorgt (Anspruch 9). Nach jedem Durchlauf des feinen Bestimmungsverfahrens wird die Positions- und Geschwindigkeitsregelung so lange aktiviert, bis der bürstenlose Elektromotor stabil zurück in seine Anfangsposition gelangt ist.

Bevorzugt wird beim feinen Verfahren wiederholt: zunächst ein Stromvektor ausgewählt und zu einem von der Positions- und Geschwindigkeitsregelung vorgegebenen Stromvektor addiert, der Elektromotor mit dem resultierenden Stromvektor beaufschlagt, sodann die dadurch verursachte Phasenlagenänderung des Rotors gemessen und diese Änderung der Auswahl eines weiteren Stromvektors sowie der Bestimmung der absoluten Phasenlage zugrundegelegt (Anspruch 10). Besonders bevorzugt wird die Amplitude des Stromvektors als die maximal zulässige Amplitude einer Treiberschaltung der Positions- und Geschwindigkeitsregelung ausgewählt (Anspruch 11). Der bürstenlose Elektromotor kann während des Ablaufes des Phasenlagenbestimmungsverfahrens somit vorteilhaft auch großen Lasten standhalten.

In einer weiteren bevorzugten Ausführungsform wird für einen Elektromotor, bei dem Rotordrehungen während des Bestimmungsverfahrens erlaubt sind, nur das feine Bestimmungsverfahren angewendet (Anspruch 12). Dieser Spezialfall kann auch dann auftreten, wenn keine statische Last an dem bürstenlosen Elektromotor hängt, z.B. für horizontal zu bewegende Achsen. Ist es also von der Konstruktion bzw. den Anforderungen an die Genauigkeit vertretbar, den bürstenlosen Elektromotor während des Bestimmungsverfahrens geringfügig zu bewegen, so reicht es aus, das gesamte Bestimmungsverfahren auf ein Aufrufen des feinen Bestimmungsverfahrens zu reduzieren, allerdings unter der Voraussetzung, daß nach jedem Durchlauf des feinen Verfahrens eine Pause eingefügt wird, so daß der Rotor genügend Zeit hat, vollständig zur Ruhe zu kommen. Bevorzugt wird der Rotor dabei nicht in seine anfängliche Phasenlage zurückgesteuert, sondern die momentane Phasenlage des Rotors relativ zum Stator als neuer Startwert für die Bestimmung der Phasenlage ausgewählt (Anspruch 13).

Bevorzugt werden verfahrensinterne bzw. vorrichtungsinterne Parameter mittels eines Fuzzy-Reglers optimiert (Anspruch 14 und 20). Damit können Parameter, die dem Bestimmungsverfahren zugrundegelegt werden und z.B. die Konvergenzgeschwindigkeit des Verfahrens oder die Stabilität gegen äußere Einflüsse festlegen, sozusagen intern - von dem Verfahren selbst - optimiert werden. Damit ergibt sich ein äußerst flexibles und anpassungsfähiges System. Wird ein bürstenloser Elektromotor mit der og. erfindungsgemäßen Vorrichtung ausgerüstet, so kann dieser bürstenlose Elektromotor anschließend für die verschiedensten Anwendungen eingesetzt werden, wobei er sich in den ersten Probeläufen selbstständig an seine neue Umwelt anpassen und nach den Probeläufen im weiteren Betriebsverlauf Schwankungen durch äußere Einflüsse flexibel berücksichtigen und kompensieren kann.

In einer weiteren bevorzugten Ausführungsform umfaßt die Positions- und/oder Geschwindigkeitsregelung eine bipolare Treiberschaltung (Anspruch 18). Weiterhin sind die Auswerteeinrichtung und/oder die Erregereinrichtung bevorzugt in einen programmierbaren Programmbaustein implementiert (Anspruch 19). Damit läßt sich mit besonders geringem Aufwand die gesamte erfindungsgemäße Vorrichtung in einer kleinen kompakten Schaltung unterbringen.

Bevorzugt wird eine Vorrichtung nach einem der Ansprüche 15 bis 20 zum kontrollierten Starten eines Elektromotors verwendet (Anspruch 21). Gerade beim Starten liegt keine Information über die absolute Phasenlage vor. Sie kann zwar beim Ausschalten in einem festen Speicher abgespeichert werden, jedoch können äußere Einflüsse die Rotorposition so verändern, daß der Bezug vollständig verlorengeht. Somit muß die Elektronik beim Einschalten die genaue absolute Phasenlage erneut bestimmen. Ebenso kann es während der Betriebsphase des bürstenlosen Elektromotors durch äußere Einflüsse o.ä. dazu führen, daß die Information über die Rotorposition verlorengeht. Auch in diesem Fall kann das erfindungsgemäße Verfahren bevorzugt zum Einsatz kommen.

Weitere Vorteile der Ausgestaltung der Erfindung ergeben sich aus der nachfolgenden Beschreibung bevorzugter Ausführungsbeispiele. In dieser Beschreibung wird auf die beigefügte schematische Zeichnung Bezug genommen.

In der Zeichnung zeigen:

Fig. 1 in schematischer Darstellung einen Schaltkreis mit einer Positions- und Geschwindigkeitsregelung für einen bürstenlosen Motor und einer erfindungsgemäßen Vorrichtung zur Bestimmung der absoluten Phasenlage;

Fig. 2 ein Flußdiagramm mit einem schematischen Ablauf eines dem groben und dem feinen Bestimmungsverfahren übergeordneten erfindungsgemäßen Steuerungsverfahren;

Fig. 3 ein Flußdiagramm mit einem schematischen Ablauf eines erfindungsgemäßen groben Bestimmungsverfahrens; und

Fig. 4 ein Flußdiagramm mit einem schematischen Ablauf eines erfindungsgemäßen feinen Bestimmungsverfahrens.

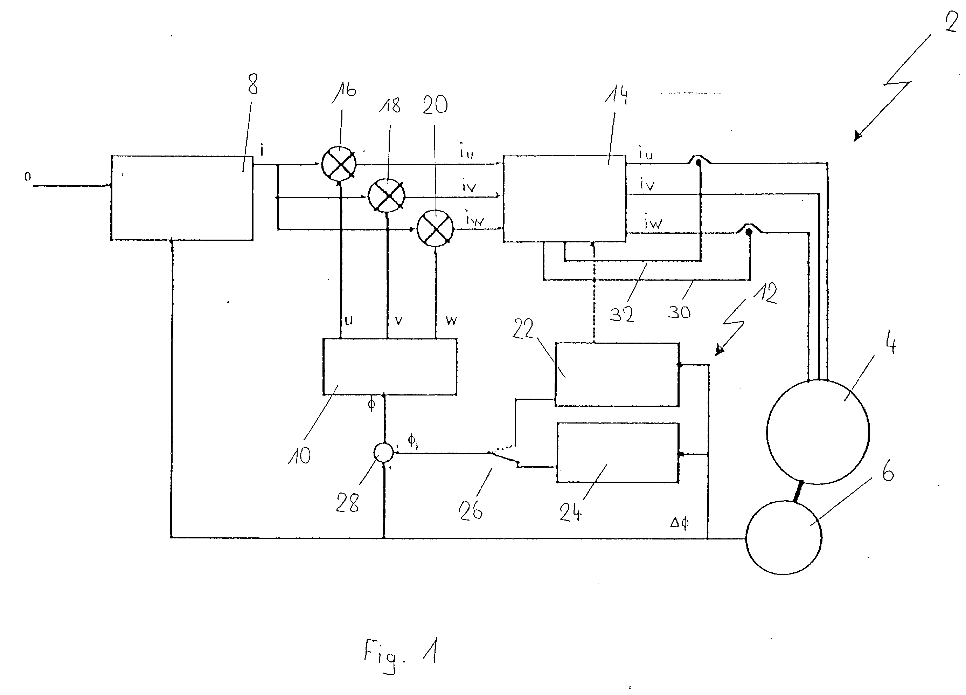

Fig. 1 zeigt in schematischer Darstellung einen Schaltungsaufbau 2, der einen bürstenlosen Motor 4, einen inkrementalen Enkoder 6 als Meßsystem, eine Positions- und Geschwindigkeitsregelung 8, einen Dreiphasen-Sinusgenerator 10, eine erfindungsgemäße Vorrichtung 12 zum Bestimmen der absoluten Phasenlage eines Rotors zu einem Stator im bürstenlosen Motor 4 und eine Stromsteuerung 14 umfaßt.

Der Dreiphasen-Sinusgenerator 10 ist über seine drei Ausgänge entlang dreier getrennter Verbindungen mit dem Eingang je eines Multiplizierers 16, 18 und 20, und diese wiederum jeweils über ihren einen Ausgang entlang dreier Verbindungen mit den drei Eingängen der Stromsteuerung 14 elektrisch verbunden. Ebenso ist die Positions- und Geschwindigkeitsregelung 8 über ihren einen Ausgang mit dem Eingang jedes der drei Multiplizierer 16, 18 und 20 und die Stromsteuerung 14 über ihre drei Ausgänge entlang dreier getrennter Verbindungen mit den drei Polpaaren des bürstenlosen Elektromotors 4 elektrisch verbunden.

Der Dreiphasen-Sinusgenerator 10 liefert drei um je 120° phasenversetzte Sinuszüge U, V, W an die jeweiligen drei Multiplizierer 16, 18 und 20. Beispielsweise werden die drei jeweiligen Sinuszüge U, V, W wie folgt bestimmt:

$$U(t) = \cos (\phi(t) + \phi_I) \qquad (1)$$

$$V(t) = \cos (\phi(t) + \phi_I + 2\pi/3) \qquad (2)$$

$$W(t) = \cos (\phi(t) + \phi_I + 4\pi/4) \qquad (3)$$

In den Formeln (1), (2) und (3) bezeichnet $\phi(t)$ die zeitliche Phasenlagenänderung des Rotors, die auch folgendermaßen ausgedrückt werden kann:

$$\phi(t) = \alpha(t) * 2p, \qquad (4)$$

wobei der Winkel $\alpha(t)$ die zeitliche mechanische Phasenlagenänderung und die Zahl p die Anzahl der Polpaare des bürstenlosen Elektromotors 4 angeben. In den Formeln (1), (2) und (3) ist $\phi_I$ der zu bestimmende Phasenwinkel, der zusammen mit der zeitlichen Phasenlagenänderung $\phi(t)$ die momentan zum Zeitpunkt t vorliegende absolute Phasenlage angibt. Die Positions- und Geschwindigkeitsregelung 8 liefert einen Strom i bestimmter Amplitude und Phasenlage an alle drei Multiplizierer 16, 18 und 20. Der Strom i wird im jeweiligen Multiplizierer entsprechend der Phasenlage U, V, W des Dreiphasen-Sinusgenerators 10 phasenversetzt, womit sich folgende drei Stromphasen $i_U$, $i_V$ und $i_W$ ergeben:

$$i_U(t) = i \cos (\phi(t) + \phi_I) \qquad (5)$$

$$i_V(t) = i \cos (\phi(t) + \phi_I + 2\pi/3) \qquad (6)$$

$$i_W(t) = i \cos (\phi(t) + \phi_I + 4\pi/3) \qquad (7).$$

Betrachtet man nun einen vereinfachten bürstenlosen Elektromotor, der genau drei Polpaare aufweist, welche jeweils mit den Stromphasen $i_U$, $i_V$ und $i_W$ versorgt werden, so ergibt sich unter der Annahme, daß die magnetische Induktion B in dem Luftspalt sinusförmig verteilt ist, die Magnetfeldstärke an jeder der drei einer Phase zugeordneten Windungen zu:

$$B_U(\phi) = B \cos (\phi(t) + \phi_I) \qquad (8)$$

$$B_V(\phi) = B \cos (\phi(t) + \phi_I + 2\pi/3) \qquad (9)$$

$$B_W(\phi) = B \cos (\phi(t) + \phi_I + 4\pi/3) \qquad (10).$$

Das Gesamtdrehmoment M auf den Rotor ist die Summe der von jeder Phase in der entsprechenden Windung erzeugten Drehmomente auf den Rotor:

$$M = M_U + M_V + M_W = k(B_U i_U + B_V i_V + B_W i_W) \qquad (11).$$

Zur Vereinfachung sind die Windungszahlen, die Geometriefaktoren, die Anzahl der Polpaare in der Konstanten k zusammengefaßt. Mit Einsetzen der Gleichungen (5) - (7) und (8) - (10) in (11) erhält man das Gesamtdrehmoment:

$$M = 3/2 \, k \, B \, i \cos (\phi(t) + \phi_I) \qquad (12).$$

Aus der Formel (12) ist ersichtlich, daß das Gesamtdrehmoment M - z.B. beim Einschalten ($\phi(t) = 0$) - nur bei einer bestimmten Phasenlage $\phi_I$ einen günstigen Wert annimmt. Im ungünstigsten Fall kann das Gesamtdrehmoment M sogar Null werden. Somit wird verständlich, warum eine genaue Information über die absolute Phasenlage des Rotors relativ zum Stator erforderlich ist, um den bürstenlosen Elektromotor 4 genau steuern zu können.

In der in Fig. 1 dargestellten Ausführungsform beeinflußt die Stromsteuerung 14 die an den bürstenlosen Elektromotor 4 gelieferten Stromphasen $i_U$, $i_V$ und $i_W$. Die innere Schleife 30 ist eine Stromsteuerungsschleife, die gewöhnlich in der Hardware implementiert ist. Sie steuert in diesem Fall die Stromphase $i_W$. Die äußere Schleife 32 ist eine Positions- und Geschwindigkeitsregelungsschleife, die gewöhnlich in einer Software inplementiert ist. Sie steuert in diesem Fall die Stromphase $i_U$.

Der imkrementale Encoder 6 verfolgt die Drehung des Rotors und damit einhergehend die Phasenlagenänderung des Rotors zum Stator im bürstenlosen Elektromotor 4. Die so erhaltene Information leitet er entweder direkt oder verschlüsselt - d.h. codiert - an die Vorrichtung 12 zur Bestimmung der absoluten Phasenlage, die Positions- und Geschwindigkeitsregelung 8 und den Dreiphasen-Sinusgenerator 10 weiter. Hierzu ist der inkrementale Encoder 6 mit der Vorrichtung 12 zur Bestimmung der absoluten Phasenlage, der Positions- und Geschwindigkeitsregelung 8 und über einen Summierer 28 mit dem Dreiphasen-Sinusgenerator 10 verbunden. Der Summierer 28 addiert im wesentlichen die vom inkrementalen Enkoder 6 und der Vorrichtung 12 zur Bestimmung der absoluten Phasenlage gelieferten Informationen und leitet sie an den Dreiphasen-Sinusgenerator 10 weiter.

Die Vorrichtung zur Bestimmung der absoluten Phasenlage 12 beinhaltet im wesentlichen zwei Einrichtungen, die zum Ablauf folgender zwei Verfahren ausgelegt sind: eines feinen Bestimmungsverfahrens 22 und eines groben Bestimmungsverfahrens 24. Beide Verfahren werden mit der Information des inkrementalen Encoders 6 versorgt. Abhängig von bestimmten Bedingungen, die unten näher erläutert werden, laufen diese beiden Verfahren 22 und 24 je nach der sozusagen als Hilfskonstruktion eingezeichneten Schalterstellung 26. Anfänglich - während der Startphase - laufen beide Verfahren 22 und 24 bei der Bestimmung der absoluten Phasenlage sozusagen parallel zueinander bzw. abhängig voneinander, während nach der Startphase nur noch das feine Bestimmungsverfahren 22 die absolute Phasenlage bestimmt, und das grobe Bestimmungsverfahren 24 nur noch unerwünschte Ausbrüche des bürstenlosen Elektromotors 4 überwacht und ggf. kompensiert.

Mit dem Einschalten der Energieversorgung für die gesamte Schaltung 2 und damit auch für den bürstenlosen Elektromotor 4 befindet sich der Rotor in einer willkürlichen Phasenlage zum Stator. Wie in Formel (12) gezeigt, kann der Elektromotor 4 gewöhnlich nicht allein von der klassischen Positions- und Geschwindigkeitsregelung 8 unter Kontrolle gehalten werden, da der Wert $\phi_I$ zum Zeitpunkt des Einschaltens unbekannt ist. Wird eine zufällige Wahl für den Wert von $\phi_I$ getroffen, so kann es vorkommen, daß der Elektromotor 4 nur ein kleines oder überhaupt kein Drehmoment erzeugen kann oder im schlimmsten Fall in die entgegengesetzte statt die gewünschte Richtung entweicht. Alleinige Anwendung der bekannten Positions- und Geschwindigkeitsregelung 8 liefert also nur einen relativen Wert $\phi(t)$, der keinen Bezug zum tatsächlich auftretenden Startwert $\phi_I$ hat, und der vom inkrementalen Encoder 6 mit dem Einschalten beim Wert Null beginnend zeitlich weiterverfolgt wird.

Erfindungsgemäß bestimmt also die Vorrichtung für das grobe Bestimmungsverfahren 24 eine Näherung für den konstanten Phasenlagenwert $\phi_I$, welcher, mit Hilfe des Summierers 28 zu der zeitlichen Phasenlagenänderung $\phi(t)$ des inkrementalen Encoders 6 addiert, als Ergebnis eine genäherte absolute Phasenlage des Rotors zum Stator liefert. Diese Information wird an den Dreiphasen-Sinusgenerator 10 weitergeleitet, der daraus die drei Phasenzüge U, V, W erzeugt. Mit diesen Phasenzügen werden wiederum die Stromphasen $i_U$, $i_V$ und $i_W$ erzeugt, mit welchen der bürstenlose Motor 4 ein geeignetes Drehmoment liefern kann. Sobald also eine geeignete Näherung für $\phi_I$ abgeschätzt worden ist, wird diese solange konstant gehalten, bis auch die Vorrichtung für das feine Bestimmungsverfahren 22 abgeschlossen hat und den Phasenlagenwert $\phi_I$ liefert, welcher, zur zeitlichen Phasenlagenänderung $\phi(t)$ addiert, die momentane absolute Phasenlage des Rotors zum Stator angibt. Damit hat die Vorrichtung zur Bestimmung der absoluten Phasenlage 12 ihre Aufgabe erfüllt, und alle weiteren Steuerungen werden - wie gehabt - von der Positions- und Geschwindigkeitsregelung 8 übernommen.

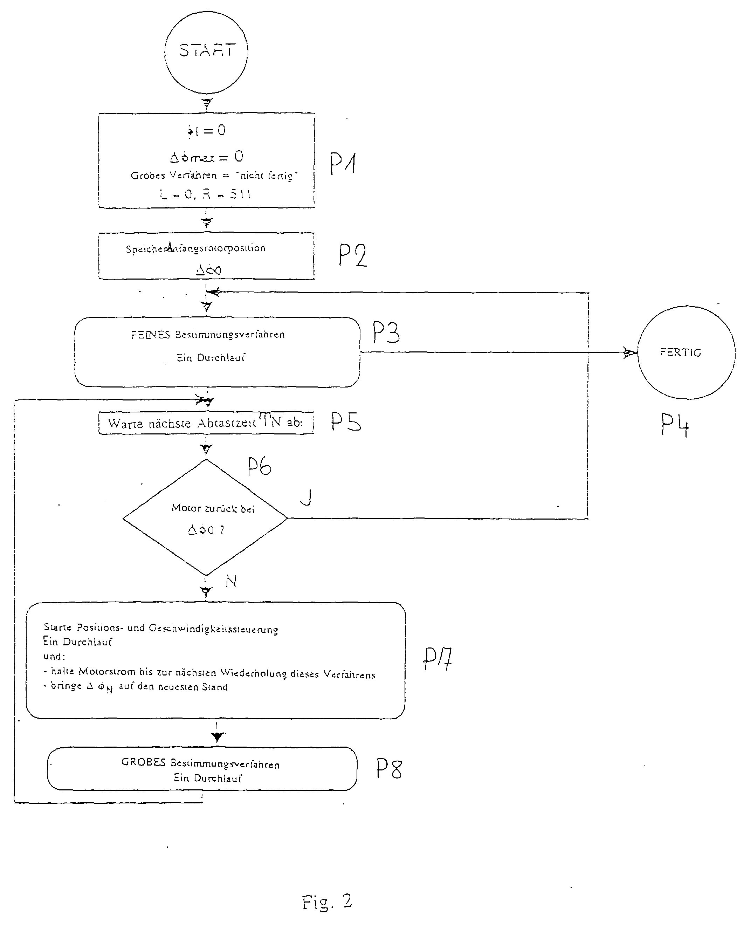

Fig. 2 zeigt in schematischer Darstellung ein Flußdiagramm für das dem feinen 22 und dem groben 24 Bestimmungsverfahren übergeordnete Steuerungsverfahren 12, das in der Vorrichtung zur Bestimmung der absoluten Phasenlage 12 implementiert ist. Dieses übergeordnete Verfahren 12 wird zum Beispiel nach Einschalten der Energieversorgung für den gesamten Schaltungsaufbau 2 gestartet.

Das Steuerungsverfahrens 12 setzt im ersten Verfahrensschritt P1 die Werte des zu bestimmenden Phasenlagenwertes $\phi_I$ und der maximal aufgetretenen Phasenlagenänderung $\Delta\phi_{max}$ zu Null. Außerdem setzt es einen Entscheidungsparameter, der angibt, ob das grobe Bestimmungsverfahren 24 abgeschlossen hat oder nicht, auf "nicht fertig". Schließlich setzt es noch zwei Werte L, R auf bestimmte Werte, welche einer zusätzlich zu beaufschlagenden Phasenlage entsprechen - in die jeweilige Drehrichtung des Rotors relativ zum Stator in oder gegen den Uhrzeigersinn. In diesem Ausführungsbeispiel setzt es L zu Null und R auf den Wert 511.

Anschließend läuft das Steuerungsverfahren 12 weiter zum Verfahrensschritt P2.

Im Verfahrensschritt P2 liest es den vom inkrementalen Encoder 6 gelieferten Wert $\Delta\phi$ ein. Dieser gibt die zeitliche Phasenlagenänderung des Rotors bezüglich des Startwertes an - also bezüglich des Positionwertes des Rotors z.B. unmittelbar nach dem Einschalten der Energieversorgung für den Schaltungsaufbau 2. Sodann läuft das Steuerungsverfahren 12 weiter zum Verfahrensschritt P3.

Im Verfahrensschritt P3 ruft es das feine Bestimmungsverfahren 22 einen Durchlauf lang auf. Dieses feine Verfahren 22 bewirkt, daß der bürstenlose Elektromotor 4 mit einem bestimmten Strom solange beaufschlagt wird, bis eine (minimale, von der Auflösung des inkrementalen Meßsystems bestimmte) Phasenlagenänderung stattgefunden hat. Die gemessene Phasenlagenänderung wird in einer nachfolgenden Berechnung berücksichtigt. Sollte das feine Bestimmungsverfahren 22 abgeschlossen haben, d.h. die absolute Phasenlage gefunden haben, so verzweigt das Steuerungsverfahren 12 zum Programmschritt P4 und beendet dort seinen Ablauf. Ist das feine Bestimmungsverfahren 22 noch nicht abgeschlossen, so läuft das Steuerungsverfahren 12 weiter zum Verfahrensschritt P5.

Im Verfahrensschritt P5 wartet das Steuerungsverfahren 12 die nächste Abtastzeit $T_N$ ab, die z.B. von einem internen Zeitgeber der Schaltung 2 geliefert wird. Sodann läuft das Steuerungsverfahren 12 weiter zum Programmschritt P6, bei dem es überprüft, ob die Stellung des Rotors relativ zum Stator wieder auf dem Wert ist, auf welchem er z.B. unmittelbar nach dem Einschalten der Energieversorgung war - prinzipiell also bei einem Wert für die zeitliche Phasenlagenänderung $\phi(t)$ von Null. Da das Steuerungsverfahren 12 aber nicht kontinuierlich mißt, sondern nur diskrete Werte für $\phi(t)$ ermitteln kann - jeweils zu den entsprechenden Abtastzeiten $T_N$ - wird hierzu also der Wert der diskreten zeitlichen Phasenlagenänderung $\Delta\phi_N$ mit dem Startwert $\Delta\phi_0$ verglichen. Befindet sich der Motor wieder in seiner Ausgangsposition entsprechend $\Delta\phi_0$, so verzweigt das Steuerungsverfahren 12 zurück zum Verfahrensschritt P3. Andernfalls läuft es weiter zum Verfahrensschritt P6, bei dem es die Positions- und Geschwindigkeitsregelung 8 einen Durchlauf lang aufruft.

Im Verfahrensschritt P6 stellt das Steuerungsverfahren 12 zusätzlich sicher, daß der momentan von der Positions- und Geschwindigkeitsregelung 8 beaufschlagte Motorstrom i bis zur nächsten Wiederholung dieses Verfahrensschrittes P7 aufrechterhalten bleibt. Weiterhin bringt es die diskrete zeitliche Phasenlagenänderung $\Delta\phi_N$ auf den neuesten Stand.

Sodann läuft das Steuerungsverfahren 12 weiter zum Verfahrensschritt P8, bei dem es das grobe Bestimmungsverfahren 24 einen Durchlauf lang aufruft. Anschließend läuft es zurück zum Verfahrensschritt P4.

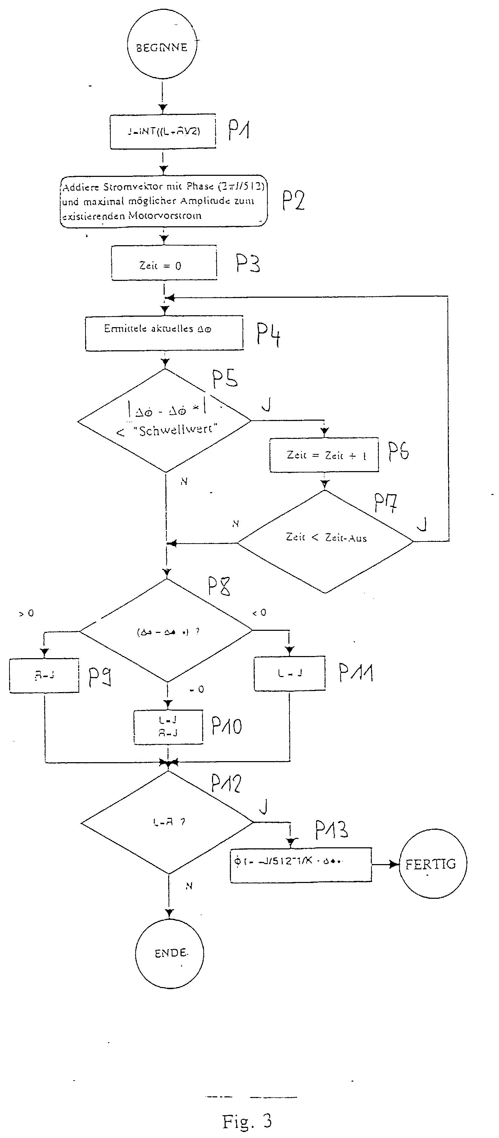

Fig. 3 zeigt in schematischer Darstellung ein Flußdiagramm für das feine Bestimmungsverfahren 22.

Während des Ablaufs des feinen Bestimmungsverfahrens 22 wird der interne Zeitgeber des Schaltungsaufbaus 2, der die Abtastzeiten $T_N$ liefert, abgeschaltet. Ebenso wird während des Ablaufs des feinen Verfahrens 22 der bürstenlose Elektromotor 4 bis zum nächsten Aufruf mit dem von der Positions- und Geschwindigkeitsregelung 8 berechneten Strom i beaufschlagt, um sicherzustellen, daß der Elektromotor 4 eventuelle statische Lasten (Z-Achse) halten kann. Das feine Bestimmungsverfahren 22 addiert nun wiederholt Stromvektoren mit verschiedenen Phasen und maximal möglichen Amplituden - d.h. daß die Vektorsumme des Stromes i aus der Positions- und Geschwindigkeitsregelung 8 und des Stromes aus dem feinen Bestimmungsverfahren 22 die maximal zulässige obere Stromgrenze der Treiberschaltung für den bürstenlosen Motor 4 nicht überschreitet - zu dem von der Positions- und Geschwindigkeitsregelung 8 gelieferten Strom i. Dies alles geschieht innerhalb kurzer Zeitperioden, die so bemessen sind, daß sich der Rotor etwas bewegen kann. Anschließend verfolgt das feine Bestimmungsverfahren 22, wie weit und in welche Richtung sich der Rotor gedreht hat. Nach jeder Iteration N wird die Information über die Drehrichtung berücksichtigt und das darauffolgende Suchintervall halbiert. Damit erhält es nach einem Maximum von N Iterationen den bis zur gewünschten Genauigkeit zu bestimmenden Wert für $\phi_I$, wobei sich N aus dem Startwert für L bzw. R nach folgender Formel ergibt:

$$N = \log_2 R \qquad (13).$$

Das feine Bestimmungsverfahren 22 startet mit dem Verfahrensschritt P1, bei welchem es der Variablen J einen ganzzahligen aus den beiden Werten L und R gemittelten Wert zuweist.

Das feine Verfahren 22 läuft weiter zum Verfahrensschritt P2, bei welchem es über den Dreiphasen-Sinusgenerator 10 in Verbindung mit den drei Multiplizierern 16, 18 und 20 einen Stromvektor mit der Phase $2\pi J/512$ und einer maximal zulässigen Amplitude zum Strom i, der von der Positions- und Geschwindigkeitsregelung 8 gehalten wird, addiert.

Das feine Verfahren 22 läuft weiter zum Verfahrensschritt P3, bei welchem es eine Variable "Zeit" zu Null setzt. Diese Variable ist ein Maß für die Zeit, wie lange der Elektromotor 4 mit dem resultierenden Stromvektor ($i_U$, $i_V$, $i_W$) aus Schritt P2 beaufschlagt wird.

Das feine Verfahren 22 läuft weiter zum Verfahrensschritt P4, bei welchem es die momentane zeitliche Phasenlagenänderung $\Delta\phi$ einliest. Da der Zeitgeber ausgeschaltet ist, liest es nicht die diskreten zeitlichen Phasenlagenänderungen $\Delta\phi N$ ein, die ja genau einer bestimmten Zeit des internen Zeitgebers entsprechen, sondern nur die momentanen zeitlichen Phasenlagenänderungen $\Delta\phi$, die den im zeitlichen Verfahrensablauf zwischen den Verfahrensschritten P4 bis P7 "künstlich" erzeugten Zeitpunkten entsprechen.

Das feine Verfahren 22 läuft weiter zum Verfahrensschritt P5, bei dem es die Differenz des aktuell ermittelten Wertes $\Delta\phi$ mit dem zuvor im Verfahrensschritt P4 ermittelten Wert der momentanen zeitlichen Phasenlagenänderung $\Delta\phi^*$ bildet und mit einem "Schwellwert" vergleicht. Dieser "Schwellwert" kann zum Beispiel einigen Meßmarken - also einer bestimmten Anzahl an kleinsten Auflösungsschritten - des inkrementalen Encoders 6 entsprechen. Mit dieser Abfrage überprüft das feine Verfahren 22, ob die Rotordrehung nicht so schnell bzw. nicht so stark ist, daß sie einen bestimmten Wert - den "Schwellwert" - überschreitet.

Ist die Rotordrehung noch innerhalb des vorgegebenen Bereiches, so verzweigt das feine Verfahren 22 zum Verfahrensschritt P6, bei dem es die Zeitvariable um genau einen Wert erhöht.

Von dort läuft das feine Verfahren 22 weiter zum Verfahrensschritt P7, bei welchem es die Zeitvariable mit einem vorgegebenen "ZEIT-AUS"-Wert vergleicht. Dieser "ZEIT-AUS"-Wert stellt die Zeit dar, innerhalb derer das feine Verfahren 22 eine Reaktion des Rotors auf den beaufschlagten Strom abwartet. Ist die Zeit somit noch nicht abgelaufen, so läuft das feine Verfahren 22 zurück zum Verfahrensschritt P4. Ist der vorgegebene Zeitbereich allerdings überschritten, so verzweigt das feine Verfahren 22 zum Verfahrensschritt P8.

Zum Verfahrensschritt P8 läuft das feine Verfahren 22 auch dann, wenn es im Verfahrensschritt P5 feststellt, daß die Differenz der momentanen $\Delta\phi$ zur bisherigen zeitlichen Phasenlagenänderung $\Delta\phi^*$ größer als der vorgegebene "Schwellwert" ist.

Im Verfahrensschritt P8 überprüft das feine Verfahren 22, ob die Differenz der momentanen $\Delta\phi$ zur bisherigen zeitlichen Phasenlagenänderung $\Delta\phi^*$ gleich Null und falls nicht, ob sie negativ oder positiv ist. Damit prüft es also, ob eine relative zeitliche Phasenlagenänderung zwischen zwei aufeinanderfolgenden Zeitpunkten stattgefunden hat und wenn ja, in welche Richtung.

Ist die Differenz der momentanen $\Delta\phi$ zur bisherigen zeitlichen Phasenlagenänderung $\Delta\phi^*$ positiv, so verzweigt das feine Verfahren 22 weiter zum Verfahrensschritt P9, bei welchem es der Variablen R den Wert der Variablen J zuweist, da sich der Rotor in Uhrzeigersinn gedreht hat.

Ist die Differenz gleich Null, so verzweigt das feine Verfahren 22 zum Verfahrensschritt P10, bei welchem es sowohl der Variablen L als auch der Variablen R den Wert J zuweist, da sich der Rotor nicht mehr gedreht hat und somit der Phasenlagenwert $\phi_I$ gefunden ist.

Ist die Differenz negativ, so verzweigt das feine Verfahren 22 zum Verfahrensschritt P11, bei welchem es der Variablen L den Wert J zuweist, da sich der Rotor gegen den Uhrzeigersinn gedreht hat.

Von den Verfahrensschritten P9 - P11 läuft das feine Verfahren 22 weiter zum Verfahrensschritt P12, bei welchem es überprüft, ob der Wert der Variablen L mit dem Wert der Variablen R übereinstimmt. Ist dies der Fall, so hat es somit den exakten Phasenlagenwert $\phi_I$ gefunden (siehe P10). In diesem Fall verzweigt das feine Verfahren 22 zum Verfahrensschritt P13, bei welchem es die absolute Phasenlage $\phi_I$ nach folgender Formel bestimmt:

$$\phi_I = J/512 \times 1/k - \Delta\phi^* \qquad (14).$$

K ist hierbei der Geometriefaktor aus Gleichung (11). Falls die Werte R und L nicht übereinstimmen, hat sich der Rotor noch gedreht. Damit ist aber der aktuelle Durchlauf des feinen Bestimmungsverfahrens 22 ersteinmal abgeschlossen und das feine Verfahren 22 springt zurück in das übergeordnete Steuerungsverfahren 12.

In speziellen Situationen, bei denen keine statische Last am Elektromotor 4 hängt - wenn zum Beispiel nur horizontale Achsen bewegt werden müssen, und etwas größere Motorbewegungen während des Verfahrens 12 zur Bestimmung der absoluten Phasenlage vertretbar sind, ist es grundsätzlich möglich, das gesamte Bestimmungsverfahren 12 nur auf einen Aufruf des feinen Bestimmungsverfahrens 22 zu beschränken. In diesem Fall wird nach jeder erregten Bewegung des Elektromotors 4 so lange eine Pause gemacht, bis der Elektromotor 4 vollständig zum Stillstand kommt. Anschließend wird die gemessene, momentane zeitliche Phasenlagenänderung $\Delta\phi$ der Bestimmung der aktuellen Phasenlage im nächsten Durchlauf zugrundegelegt.

All die in den einzelnen Verfahrensschritten ausgeführten Zuweisungen oder Abfragen beziehen sich auf einen inkrementalen Encoder 6, der derart verdrahtet ist, daß er den bürstenlosen Elektromotor 4 mit einem Strom gemäß der Gleichungen (5) - (7) speist, wobei $\phi$ (t) monoton steigt, wenn die gemessene Bewegung bzw. Drehung positiv ist bzw. im Uhrzeigersinn verläuft. Im entgegengesetzten Fall müssen die mit einem * in den Flußdiagrammen gekennzeichneten Größen in ihrem Vorzeichen geändert werden. Außerdem ändert sich in diesem Fall der Ausdruck (14) für $\phi_I$ zu:

$$\phi_I = -J/512 \times 1/k - \Delta\phi^* \qquad (14a).$$

Zusätzlich muß die Information $\phi$ aus dem in Fig. 1 gezeigten Schaltungsaufbau 2 im Vorzeichen geändert werden, bevor sie an den Dreiphasen-Sinusgenerator 10 weitergeleitet wird.

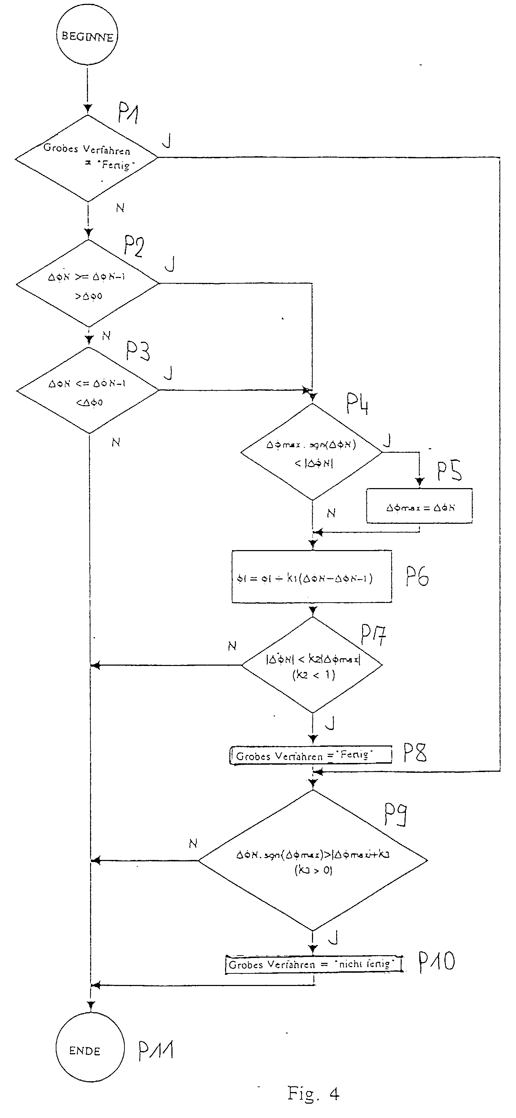

Fig. 4 zeigt in schematischer Darstellung ein Flußdiagramm für das grobe Bestimmungsverfahren 24. Das grobe Bestimmungsverfahren 24 überwacht u. a. den bürstenlosen Elektromotor 4, damit dieser keine unkontrollierten Bewegungen ausführt. Wenn dies der Fall ist, verändert es $\phi_I$ um einen bestimmten Wert, welcher entsprechend einem Faktor $k_1$ proportional zur

Entweichgeschwindigkeit des Rotors ist. Die Entweichgeschwindigkeit ist hierbei ein Maß für die Winkelgeschwindigkeit der Rotordrehung. Sobald der bürstenlose Elektromotor 4 innerhalb eines bestimmten Bereiches um seine Anfangsposition ist, wobei dieser bestimmte Bereich durch einen Faktor $k_2$ abgegrenzt wird, hält das grobe Verfahren 24 den aktuell gefundenen Wert von $\phi_I$ und schaltet einen Entscheidungsparameter "grobes Bestimmungsverfahren" auf "fertig". Dies bedeutet, daß das grobe Bestimmungsverfahren 24 abgeschlossen hat und von nun an nur noch eine Sicherheits-Überwachungsfunktion übernimmt. Es wird nur dann erneut für eine genauere Abschätzung des Phasenwinkels $\phi_I$ aufgerufen, falls der bürstenlose Elektromotor 4 wieder entweichen sollte.

Der "Schwellwert", ab welchem der Rotor erneut ausgebrochen ist, wird durch einen Faktor $k_3$ festgelegt. Es muß hierbei bemerkt werden, daß das grobe Bestimmungsverfahren 24 nur zu einer Lösung konvergieren kann, wenn der Elektromotor 4 - etwa durch eine "Störung" - bewegt wird. Diese "Störung" wird vorallem durch das feine Bestimmungsverfahren 22 verursacht.

Das grobe Bestimmungsverfahren 24 startet mit dem Verfahrensschritt P1, bei welchem es den Entscheidungsparameter "grobes Verfahren" abfragt. Findet es diesen Entscheidungsparameter im Zustand "fertig", so verzweigt das grobe Verfahren 24 zum Verfahrensschritt P9. Im anderen Falle läuft es weiter zum Verfahrensschritt P2.

Im Verfahrensschritt P2 vergleicht es die momentane diskrete zeitliche Phasenlagenänderung $\Delta\phi_N$ mit der im vorhergehenden Durchlauf ermittelten diskreten zeitlichen Phasenlagenänderung $\Delta\phi_{N-1}$. Falls der momentane Wert größer als der bisherige Wert ist, verzweigt das grobe Verfahren 24 zum Verfahrensschritt P4. Im anderen Fall läuft es weiter zum Verfahrensschritt P3, bei dem es dieselbe Abfrage wie im Verfahrensschritt P2 vornimmt.

Stellt es im Verfahrensschritt P3 fest, daß der momentane Wert kleiner als der bisherige Wert ist, so verzweigt das grobe Verfahren 24 zum Verfahrensschritt P4, andernfalls - d.h. im Falle, daß der momentane Wert gleich dem bisherigen Wert ist, wird das grobe Bestimmungsverfahren 24 beendet.

Im Verfahrensschritt P4 multipliziert es den maximal aufgetretenen Wert $\Delta\phi_{max}$ der diskreten zeitlichen Phasenlagenänderung mit dem Vorzeichen der aktuellen relativen Phasenänderung und vergleicht das Ergebnis mit dem Betrag der momentanen diskreten zeitlichen Phasenlagenänderung $\Delta\phi_N$. Ist der erste Wert kleiner als der zweite, so verzweigt das grobe Verfahren 24 zum Verfahrensschritt P5, bei welchem es den Wert $\Delta\phi_{max}$ gleich dem Wert der momentanen diskreten zeitlichen Phasenlagenänderung $\Delta\phi_N$ setzt. Somit bringt es den Wert der maximal aufgetretenen, diskreten zeitlichen Phasenlagenänderung $\Delta\phi_{max}$ immer auf den neuesten Stand. Andernfalls läuft das grobe Verfahren 24 weiter zum Verfahrensschritt P6.

Im Verfahrensschritt P6 ändert das grobe Verfahren 24 den Wert für die absolute Phasenlage $\phi_I$ nach folgender Formel:

$$\phi_I = \phi_I + k_1 \, (\Delta\phi_N - \Delta\phi_{N-1}) \qquad (15).$$

Anschließend läuft das grobe Verfahren 24 weiter zum Verfahrensschritt P7, bei welchem es den Betrag der momentanen diskreten zeitlichen Phasenlagenänderung $\Delta\phi_N$ mit dem Produkt aus dem Faktor $k_2$ und dem Betrag des maximal aufgetretenen Wertes $\Delta\phi_{max}$ der diskreten zeitlichen Phasenlagenänderung vergleicht. Ist der erste Wert kleiner als der zweite, so läuft das grobe Verfahren 24 weiter zum Verfahrensschritt P8. Andernfalls wird das grobe Bestimmungsverfahren 24 beendet.

Im Verfahrensschritt P8 setzt es den Entscheidungsparameter "grobes Verfahren" auf "fertig".

Von dort läuft das grobe Verfahren 24 weiter zum Verfahrensschritt P9, bei dem es erneut eine Abfrage durchführt. Es bildet dort das Produkt aus der momentanen diskreten zeitlichen Phasenlagenänderung $\Delta\phi_N$ und dem Vorzeichen des maximal aufgetretenen Wertes $\Delta\phi_{max}$ der diskreten zeitlichen Phasenlagenänderung und vergleicht das Produkt mit dem Betrag von $\Delta\phi_{max}$ plus einer Konstanten $k_3$. Ist das Produkt größer als die Summe, so läuft das grobe Verfahren 24 weiter zum Verfahrensschritt P10. Andernfalls wird das grobe Bestimmungsverfahren 24 beendet.

Im Verfahrensschritt P10 setzt es den Entscheidungsparameter "grobes Verfahren" auf "nicht fertig". Anschließend wird das grobe Bestimmungsverfahren 24 beendet.

Die Reaktionsfähigkeit der Positions- und Geschwindigkeitsregelung auf Phasenlagenänderungen während der Bestimmung 12 der absoluten Phasenlage muß bezüglich der Reaktionsfähigkeit der Positions- und Geschwindigkeitsregelung während eines normalen Betriebes des bürstenlosen Elektromotors 4 - d.h. ohne daß das zusätzliche Verfahren 12 zur Bestimmung der absoluten Phasenlage läuft - gedämpft werden. Dafür gibt es im wesentlichen zwei Gründe:

Erstens ist das grobe Bestimmungsverfahren 24 auf plötzliche oder heftige Bewegungen und Übersteuerungen des bürstenlosen Elektromotors 4 leicht anfällig, was möglicherweise zu einer schlechten Näherung für den Phasenlagenwert $\phi_I$ führen kann.

Zweitens ist während der ersten Durchläufe des groben Bestimmungsverfahrens 24 die Näherung für $\phi_I$ noch nicht sehr genau. Da die Positions- und Geschwindigkeitsregelung 8 aber diesen Wert für $\phi_I$ benutzt, kann sich der bürstenlose Elektromotor 4 in die andere als die gewünschte Richtung bewegen und somit außer Kontrolle geraten. Das grobe Bestimmungsverfahren 24 braucht also einige Zeit bis es eine vernünftige Näherung für $\phi_I$ findet und den bürstenlosen Elektromotor 4 unter Kontrolle bekommt. Um ungewünschte Motorbewegungen während dieser Zeit zu minimieren, darf die Positions- und Geschwindigkeitsregelung 8 nicht zu heftig reagieren.

Während des normalen Betriebes und auch während des Ablaufs des Bestimmungsverfahrens 12 wird die Positions- und Geschwindigkeitsregelung 8 auf dieselbe Art eingesetzt, wie während der normalen Motorbetriebsweise. Der von der Positions- und Geschwindigkeitsregelung 8 gelieferte Strom i wird bevorzugt nach Art eines klassischen digitalen PID-Typs bestimmt. Der Strom $i_N$ in der N-ten Iteration wird nach folgender Differentialgleichung berechnet:

$$i_N = c_1 \, (c_0(x_{N(ref)} - x_{N(mot)}) + v_{N(ref)} - v_{N(mot)}) + c_2/c_1 c_0(i_{N-1})$$

$$-c_2/c_0(v_{N-1(ref)} - v_{N-1(mot)}) \qquad (16),$$

wobei:

$v_{N0} := x_{N0} - x_{N-10}$,

$x_{N(ref)}, \; v_{N(ref)} :=$ Referenzposition, -geschwindigkeit,

$x_{N(mot)}, \; v_{N(mot)} :=$ Motorposition, Geschwindigkeitsrückkopplung.

$c_1, c_2, c_3 :=$ Koeffizienten

Dieses zusätzliche Korrekturverfahren wird zu dem Zweck eingesetzt, eventuelles "Rutschen" der Rotorposition zu erfassen und im voraus zu korrigieren. Dies ist vorallem für synchronisierte Mehrachsenbewegungen wichtig. Obwohl die Formel (16) es nicht unmittelbar angibt, wird der Integralanteil nur vom Positionsfehler getragen.

Um also die oben angesprochenen Dämpfungseigenschaften der Positions- und Geschwindigkeitsregelung 8 während der Anlaufphase des groben Bestimmungsverfahrens 24 zu erhöhen, muß die Gewichtung des Positionsfehlerverstärkers in Relation zu der Gewichtung des Geschwindigkeitsfehlerverstärkers (entspricht dem Faktor $c_0$) stark reduziert werden (z.B. um einen Faktor 50 verglichen mit dem Wert bei normalen Betrieb), während die Faktoren $c_1$ und $c_2$ nahezu unverändert bleiben. Die resultierende Reaktion pro Meßschritt wird damit langsamer. Außerdem werden Positionsfehler weitestgehend vom Integrator $c_2$ korrigiert und hängen folglich von der intrinsischen Zeitkonstante ab.

Ebenso muß der Satz Koeffizienten $k_1$, $k_2$, $k_3$ im groben Bestimmungsverfahren 24 sorgfältig ausgewählt werden.

Der Koeffizient $k_1$ setzt das "Ziel" des groben Verfahrens 24 fest, d.h. ab wann die Näherung für $\phi_l$ genügend genau bestimmt sein soll. Damit konvergiert das grobe Verfahren 24 schneller und kommt somit schneller zum Abschluß, wenn der Wert für $k_1$ erhöht wird. Eine Erhöhung führt aber gleichauch zu Instabilitäten während des Ablaufes des gesamten Bestimmungsverfahrens 12.

Der Koeffizient $k_2$ gibt dem groben Verfahren 24 an, wann es die Suche nach einer noch besseren Näherung für $\phi_l$ abbrechen soll. Mit einem Wert für $k_2$ nahe bei 1 schließt das grobe Verfahren 24 zu schnell mit einem zu ungenauen Wert für $\phi_l$ ab. Auf der anderen Seite können für einen Wert von $k_2$ zu nahe bei Null Instabilitäten auftreten.

Schließlich wird über den Wert für $k_3$ der Schwellwert gesetzt, ab welchem das grobe Verfahren 24 erneut aufgerufen werden soll, um eine noch bessere Näherung für $\phi_l$ zu finden, nachdem es einmal abgeschlossen hat. Der Schwellwert sollte nicht zu eng gewählt werden, um dem gesamten elektromechanischen System einen gewissen Spielraum zu lassen.

Es ist einleuchtend, daß die Koeffizienten nicht unabhängig voneinander sind, sodaß eine optimale Abstimmung in mehreren Versuchen oder Schritten erfolgen sollte. Allerdings ist die Wahl der Koeffizienten auch nicht so kritisch, wie sie erscheinen mag. So kann z.B. eine bestimmte Wahl für $k_1$, $k_2$ und $k_3$ ebensogut für die verschiedensten Anwendungen (verschiedene Lasten, Reibungen etc.) zufriedenstellend arbeiten.

Für die Wahl der Koeffizienten $c_1$, $c_2$ und $c_3$ ist es von Vorteil, diese zuerst für einen bürstenlosen Elektromotor 4 mit bekannter Rotorposition oder für einen bürstenlosen Elektromotor 4, der in eine bekannte absolute Rotorposition bringbar ist, zu treffen.

Die Wahl der einzelnen Koeffizienten kann auch mit Hilfe eines Fuzzy-Reglers erfolgen.

**Patentansprüche**

1. Verfahren zur Steuerung eines Elektromotors, insbesondere eines bürstenlosen Elektromotors (4), bei dem die absolute Lage ($\phi_l$) eines Rotors relativ zu einem Stator des Elektromotors (4) bestimmt wird, in dem:

   a) eine Bewegung des Rotors durch Anlegen eines Signals bekannter Größe (J) an den Elektromotor (4) angeregt wird,

   dadurch gekennzeichnet, daß:

   b) die als Reaktion des Elektromotors (4) auf das Signalanlegen durchgeführte Lageänderung ($\Delta\varnothing^*$) des Rotors relativ zum Stator gemessen wird; und

   c) die absolute Lage ($\varnothing_l$) aus der gemessenen Lageänderung ($\Delta\varnothing^*$) und dem Wert (J) der an den Elektromotor (4) angelegten Signalgröße abgeleitet wird.

**2.** Verfahren nach Anspruch 1, dadurch gekennzeichnet, daß der Elektromotor (4) von einer Positions- und Geschwindigkeitsregelung (8) angeregt wird.

**3.** Verfahren nach Anspruch 2, dadurch gekennzeichnet, daß der Elektromotor (4) mit einem sinusförmigen oder trapezförmigen Stromverlauf (i) angeregt wird.

**4.** Verfahren nach einem der vorhergehenden Ansprüche, dadurch gekennzeichnet, daß die Phasenlagenänderung ($\Delta\phi_N$) mit Hilfe eines inkrementalen, optischen Meßsystems (6) gemessen wird.

**5.** Verfahren nach einem der vorhergehenden Ansprüche, dadurch gekennzeichnet, daß die Bestimmung der absoluten Phasenlage (12) nach einem feinen (22) und einem groben Bestimmungsverfahren (24) erfolgt, wobei beim groben Verfahren (24) der Rotor in einem vorgegebenen Phasenlagenbereich gehalten wird, insbesondere auf einem bestimmten Wert, und beim feinen Verfahren (22) die genaue absolute Phasenlage ("$\phi_I$") bestimmt wird.

**6.** Verfahren nach Anspruch 5, dadurch gekennzeichnet, daß beim feinen Bestimmungsverfahren (22) die absolute Phasenlage ("$\phi_I$") über ein binäres Suchverfahren bestimmt wird.

**7.** Verfahren nach einem der Ansprüche 5 oder 6, dadurch gekennzeichnet, daß zu Beginn der Phasenlagebestimmmung beide Verfahren (22, 24) solange laufen, bis der Rotor einen vorgegebenen Phasenlagenbereich einnimmt, insbesondere einen Phasenlagenwert, und sodann beim groben Verfahren (24) nur noch Motorausbrüche überwacht werden.

**8.** Verfahren nach einem der Ansprüche 5 bis 7, dadurch gekennzeichnet, daß beim groben Verfahren (24) der Betrag der anzuregenden Bewegung des Rotors in Abhängigkeit der gemessenen Ausbruchgeschwindigkeit oder Ausbruchbeschleunigung des Rotors im Elektromotor (4) gewählt wird.

**9.** Verfahren nach einem der Ansprüche 5 bis 8, dadurch gekennzeichnet, daß während des feinen Verfahrens (22) der Elektromotor (4) von der Positions- und Geschwindigkeitsregelung (8) ständig mit einem Strom (i) versorgt wird.

**10.** Verfahren nach einem der Ansprüche 5 bis 9, dadurch gekennzeichnet, daß beim feinen Verfahren (22) wiederholt:

    a) zunächst ein Stromvektor ausgewählt und zu einem von der Positions- und Geschwindigkeitsregelung (8) vorgegebenen Stromvektor (i) addiert wird,

    b) der Elektromotor (4) mit dem resultierenden Stromvektor (($i_U$, $i_V$, $i_W$)) beaufschlagt wird,

    c) sodann die dadurch verursachte Phasenlagenänderung ($\Delta\phi_N$) des Rotors gemessen wird, und

    d) diese Änderung der Auswahl eines weiteren Stromvektors sowie der Bestimmung der absoluten Phasenlage ("$\phi_I$") zugrundelegt wird.

**11.** Verfahren nach Anspruch 10, dadurch gekennzeichnet, daß die Amplitude des Stromvektors (($i_U$, $i_V$, $i_W$)) als die maximal zulässige Amplitude einer Treiberschaltung der Positions- und Geschwindigkeitsregelung (8) ausgewählt wird.

**12.** Verfahren nach einem der Ansprüche 5 bis 11, dadurch gekennzeichnet, daß für einen Elektromotor (4), bei dem Rotordrehungen während des Bestimmungsverfahrens (12) erlaubt sind, nur das feine Bestimmungsverfahren (22) angewendet wird.

**13.** Verfahren nach Anspruch 12, dadurch gekennzeichnet, daß der Rotor nicht in seine anfängliche Phasenlage ($\Delta\phi_0$) zurückgesteuert wird, sondern die momentane Phasenlage ($\Delta\phi_N$) als neuer Startwert für die Bestimmung der absoluten Phasenlage ("$\phi_I$") ausgewählt wird.

**14.** Verfahren nach einem der vorhergenden Ansprüche, dadurch gekennzeichnet, daß verfahrensinterne Parameter mittels eines Fuzzy-Regler optimiert werden.

**15.** Vorrichtung zur Steuerung eines Elektromotors, insbesondere eines bürstenlosen Elektromotors (4), mit:

    a) einer Erregereinrichtung (8, 10, 14) zum Anregen einer Bewegung eines Rotors relativ zu einem Stator durch Anlegen eines Signals vorgegebener Größe (J) an den Elektromotor (4),

dadurch gekennzeichnet, daß die Vorrichtung ferner aufweist:

    b) eine Meßeinrichtung (6) zum Messen der Lageänderung ($\Delta\varnothing^*$) zwischen dem Rotor und dem Stator als Reaktion des Signalanlegens an den Elektromotor (4);

    c) eine Auswerteeinrichtung (12) zum Ableiten der absoluten Lage ($\varnothing_I$) des Rotors relativ zum Stator aus dem Wert der Lageänderung ($\Delta\varnothing^*$) und dem Wert (J) der an den Elektromotor (4) angelegten Signalgröße.

**16.** Vorrichtung nach Anspruch 15, dadurch gekennzeichnet, daß die Meßeinrichtung (6) ein inkrementales, optisches Meßsystem ist.

17. Vorrichtung nach einem der Ansprüche 15 oder 16, dadurch gekennzeichnet, daß die Erregereinrichtung (8, 10, 14) eine Positions- und Geschwindigkeitsregelung umfaßt (8).

18. Vorrichtung nach Anspruch 17, dadurch gekennzeichnet, daß die Positions- und Geschwindigkeitsregelung (8) eine bipolare Treiberschaltung umfaßt.

19. Vorrichtung nach einem der Ansprüche 15 bis 18, dadurch gekennzeichnet, daß die Auswerteeinrichtung (12) und/oder die Erregereinrichtung (8, 10, 14) in einem programmierbaren Programmbaustein implementiert sind.

20. Vorrichtung nach einem der Ansprüche 15 bis 19, gekennzeichnet durch einen Fuzzy-Regler zum Optimieren von vorrichtungsinternen Parametern.

21. Verwendung einer Vorrichtung nach einem der Ansprüche 15 bis 20 zum Starten eines Elektromotors, insbesondere eines bürstenlosen Elektromotors (4).

## Claims

1. A method for controlling an electric motor, particularly a brushless electric motor, wherein the phase position ($\Phi_I$) of a rotor in relation to a stator of the electric motor (4) is determined, in that:

    a) a movement of the rotor is excited by applying a signal of a known value (J) to the electrical motor (4), characterized in, that:
    b) the position change ($\Delta\Phi$) of the rotor in relation to the stator performed by the electrical motor (4) in reaction to applying the signal is measured; and
    c) the absolute position ($\Delta\Phi_I$) is derived from the measured position change ($\Delta\Phi$) and the value (J) of the signal magnitude value applied to the electrical motor (4).

2. A method according to Claim 1, characterized in that the electric motor (4) is excited by a position and speed control (8).

3. A method according to Claim 2, characterized in that the electric motor (4) is excited by a sinusoidal or trapezoidal current mode (i).

4. A method according to one of the preceeding Claims, characterized in that the phase position change ($\Delta\Phi_N$) is measured with an incremental, optical measuring system (6).

5. A method according to one of the preceeding Claims, characterized in that the determination of the absolute phase position (12) is performed according to a fine (22) and a coarse (24) measurement process, whereby in the coarse process (24) the rotor is retained in a specified phase position range, in particular at a given value, and the exact absolute phase position ($\Phi_I$) is determined in the fine process (22).

6. A method according to Claim 5, characterized in that in the fine measurement process (22) the absolute phase position ($\Phi_I$) is determined by a binary search routine.

7. A method according to one of Claims 5 or 6, characterized in that at the beginning of the phase position determination, both processes (22, 24) run until the rotor assumes a specified phase position range, in particular a phase position value, and subsequently during the coarse process (24) only motor break-outs are monitored.

8. A method according to one of Claims 5 to 7, characterized in that in the coarse process (24), the magnitude of the rotor movement to be excited is selected depending on the measured break-out velocity or break-out acceleration of the rotor in the electric motor (4).

9. A method according to one of Claims 5 to 8, characterized in that during the fine process (22), a current (i) is permanently supplied to the electric motor (4) by the position and speed control (8).

10. A method according to one of Claims 5 to 9, characterized in that in the fine process (22) repeatedly:

    a) a current vector is selected initially and added to a current vector (i) which is set by the position and speed control (8),
    b) the resulting current vector (($i_u$, $i_v$, $i_w$)) is applied to the electric motor (4),
    c) then the phase position change ($\Delta\Phi_N$) of the rotor so caused is measured, and
    d) this change is used as a basis for selecting another current vector as well as for determining the absolute phase position ($\Phi_I$).

11. A method according to Claim 10, characterized in that the amplitude of the current vector (($i_u$, $i_v$, $i_w$)) is selected as the maximum allowed amplitude of a driver circuit of the position and speed control (8).

12. A method according to one of Claims 5 to 11, characterized in that for an electric motor (4) for which rotor rotations are allowed during the measurement process (12), only the fine measurement process (22) is applied.

13. A method according to Claim 12, characterized in that the rotor is not returned to its initial phase position ($\Delta\Phi_0$), but the current phase position ($\Delta\Phi_N$) is selected as a new starting value for determining the absolute phase position ($\Phi_I$).

14. A method according to one of the preceeding Claims, characterized in that parameters internal to the process are optimized by a fuzzy controller.

15. An apparatus for controlling an electric motor, in particular a brushless electric motor (4), comprising:

a) exciting means (8, 10, 14) for exciting a movement of a rotor in relation to a stator by applying a signal of a predetermined value (J) to the electrical motor (4), characterized in, that the apparatus is further comprising:
b) measuring means (6) for measuring the change in position ($\Delta\Phi$) between the rotor and the stator in reaction to applying the signal to the electrical motor (4) ;
c) interpreting means (12) for deducing the absolute position ($\Phi_I$) of the rotor in relation to the stator from the value of the position change ($\Delta\Phi$) and the value (J) of the signal magnitude applied to the electrical motor (4).

16. An apparatus according to Claim 15, characterized in that the measuring system (6) is an incremental, optical measuring system.

17. An apparatus according to one of Claims 15 or 16, characterized in that the excitations means (8, 10, 14) comprise a position and speed control (8).

18. An apparatus according to Claim 17, characterized in that the position and speed control (8) comprises a bipolar driver circuit.

19. An apparatus according to one of Claims 15 to 18, characterized in that the interpreting means (12) and/or the exciting means (8, 109 14) are implemented in a programmable program unit.

20. An apparatus according to one of Claims 15 to 19, characterized by a fuzzy controller for optimizing the parameters internal to the apparatus.

21. An application of an apparatus according to one of the Claims 15 to 20 for starting an electric motor, in particular a brushless electric motor (4).

**Revendications**

1. Procédé de commande d'un moteur électrique, en particulier d'un moteur électrique (4) sans balais, dans lequel la position absolue ($\Phi_I$) d'un rotor par rapport à un stator du moteur électrique (4) est déterminée, par le fait que:

a) un déplacement du rotor est lancé par application d'un signal d'une grandeur connue (J) au moteur électrique (4),

caractérisé en ce que

b) la variation ($\Delta\Phi^*$) de position du rotor par rapport à un stator, par réaction du moteur électrique (4) à l'application du signal, est mesurée; et
c) la position absolue ($\Phi_I$) est dérivée de la variation mesurée ($\Delta\Phi^*$) de position et de la valeur (J) de la grandeur de signal appliquée au moteur électrique (4).

2. Procédé selon la revendication 1, caractérisé en ce que le moteur électrique (4) est excité par une régulation (8) de position et de vitesse.

3. Procédé selon la revendication 2, caractérisé en ce que en ce que le moteur électrique (4) est excité au moyen d'un profil (i) de courant de forme sinusoïdal ou trapézoïdale.

4. Procédé selon l'une des revendications précédentes, caractérisé en ce que la variation ($\Delta\Phi_N$) de position de phase est mesurée à l'aide d'un système de mesure optique incrémental (6).

5. Procédé selon l'une des revendications précédentes, caractérisé en ce que la détermination de la position absolue (12) de phase est réalisée selon un procédé de détermination fin (22) et un procédé de détermination approximatif (24), le rotor étant maintenu dans une zone prédéfinie de positions de phase, en particulier à une valeur définie, dans le procédé approximatif (24) et la position absolue précise ("$\Phi_I$") de phase étant déterminée dans le processus fin (22).

6. Procédé selon la revendication 5, caractérisé en ce que la position absolue ("$\Phi_I$") de phase est déterminée par le procédé de détermination fin (22) par un procédé de recherche binaire.

7. Procédé selon l'une des revendications 5 ou 6, caractérisé en ce que les deux procédés (22, 24) sont mis en oeuvre au début de la détermination de position de phase, jusqu'à ce que le rotor parvienne à une zone prédéfinie de positions de phase, en particulier à une valeur de position de phase et en ce que, pour le procédé approximatif (24), seuls des écarts du moteur sont encore surveillés.

8. Procédé selon l'une des revendications 5 à 7, caractérisé en ce que, pour le procédé approximatif (24), l'ampleur du déplacement du rotor à provoquer est choisie en fonction de la vitesse d'écarte ou de l'accélération d'écart mesurées du rotor de l'électromoteur (4).

9. Procédé selon l'une des revendications 5 à 8, caractérisé en ce que le moteur électrique (4) est alimenté constamment en un courant (i) par la régulation (8) de position et de vitesse pendant le procédé fin (22).

10. Procédé selon l'une des revendications 5 à 9, caractérisé en ce que les étapes suivantes sont mises en oeuvre de façon répétée, pour le procédé fin (22) :

a) en premier lieu, un vecteur de courant est choisi et est additionné à un vecteur de courant (i) prédéfini par la régulation (8) de position et de vitesse,
b) le vecteur de courant résultant (($i_U$, $i_V$, $i_W$)) est appliqué au moteur électrique (4),
c) la variation ($\Delta\Phi_N$) de position de phase du rotor qui en résulte est ensuite mesurée, et
d) cette variation sert de base au choix d'un autre vecteur de courant ainsi que de la détermination de la position absolue ("$\Phi_I$") de phase.

11. Procédé selon la revendication 10, caractérisé en ce que l'amplitude du vecteur de courant (($i_U$, $i_V$, $i_W$)) est choisie comme l'amplitude maximale admissible d'un circuit d'attaque de la régulation (8) de position et de vitesse.

12. Procédé selon l'une des revendications 5 à 11, caractérisé en ce que seul le procédé de détermination fin (22) est utilisé pour un moteur électrique (4) dans lequel des rotations du rotor sont permises pendant le procédé de détermination (12).

13. Procédé selon la revendication 12, caractérisé en ce que le rotor n'est pas rappelé dans sa position initiale ($\Delta\Phi_0$) de phase, mais que la position momentanée ($\Delta\Phi_N$) de phase est choisie comme nouvelle valeur initiale pour la détermination de la position absolue ("$\Phi_I$") de phase.

14. Procédé selon l'une des revendications précédentes, caractérisé en ce que des paramètres internes au procédé sont optimisés au moyen d'un régulateur flou.

15. Appareil de commande d'un moteur électrique, en particulier d'un moteur électrique (4) sans balais, comportant:

a) un dispositif excitateur (8, 10, 14) pour lancer un déplacement d'un rotor par rapport à un stator en appliquant un signal d'une grandeur prédéfinie (J) au moteur électrique (4),

caractérisé en ce que le dispositif comprend en outre:

b) un dispositif de mesure (6) pour mesurer la variation ($\Delta\Phi^*$) de position entre le rotor et le stator, par réaction à l'application du signal au moteur électrique (4);
c) un dispositif d'évaluation (12) pour dériver la position absolue ($\Phi_I$) du rotor par rapport au stator à partir de la valeur de la variation ($\Delta\Phi^*$) de position et de la valeur (J) de la grandeur de signal appliquée au moteur électrique (4).

16. Appareil selon la revendication 15, caractérisé en ce que le dispositif de mesure (6) est un système de mesure optique incrémental.

17. L'appareil selon l'une des revendications 15 ou 16, caractérisé en ce que le dispositif excitateur (8, 10, 14) comprend une régulation (8) de position et de vitesse.

18. Appareil selon la revendication 17, caractérisé en ce que la régulation (8) de position et de vitesse est un circuit d'attaque bipolaire.

19. Appareil selon l'une des revendications 15 à 18, caractérisé en ce que le dispositif d'évaluation (12) et/ou le dispositif excitateur (8, 10, 14) sont implantés dans un composant programmable de programme.

20. Appareil selon l'une des revendications 15 à 19, caractérisé par un régulateur flou destiné à l'optimisation de paramètres internes à l'appareil.

21. Utilisation d'un appareil selon l'une des revendications 15 à 20 pour le démarrage d'un moteur électrique, en particulier d'un moteur électrique (4) sans balais.

Fig. 1

EP 0 708 521 B1

START

$\vartheta I = 0$

$\Delta \vartheta_{max} = 0$

Grobes Verfahren = "nicht fertig"

$L = 0, R = 511$

P1

Speichere Anfangsrotorposition

$\Delta \infty$

P2

FEINES Bestimmungsverfahren

Ein Durchlauf

P3

FERTIG

P4

Warte nächste Abtastzeit $T_N$ ab

P5

Motor zurück bei

$\Delta \varphi 0$ ?

P6

J

N

Starte Positions- und Geschwindigkeitssteuerung

Ein Durchlauf

und:

- halte Motorstrom bis zur nächsten Wiederholung dieses Verfahrens

- bringe $\Delta \varphi_N$ auf den neuesten Stand

P7

GROBES Bestimmungsverfahren

Ein Durchlauf

P8

Fig. 2

Fig. 3

Fig. 4

**BEGINNE**

P1: Grobes Verfahren = "Fertig" — J / N

P2: $\Delta\dot\phi N >= \Delta\dot\phi N-i > \Delta\dot\phi 0$ — J / N

P3: $\Delta\dot\phi N <= \Delta\dot\phi N-i < \Delta\dot\phi 0$ — J / N

P4: $\Delta\dot\phi max . sgn(\Delta\dot\phi N) < |\Delta\dot\phi N|$ — J / N

P5: $\Delta\dot\phi max = \Delta\dot\phi N$

P6: $\phi i = ci + k_1(\Delta\dot\phi N - \Delta\dot\phi N-i)$

P7: $|\Delta\dot\phi N| < k_2|\Delta\dot\phi max|$ $(k_2 < 1)$ — N / J

P8: Grobes Verfahren = "Fertig"

P9: $\Delta\dot\phi N . sgn(\Delta\dot\phi max) > |\Delta\dot\phi max| + k_3$ $(k_3 > 0)$ — N / J

P10: Grobes Verfahren = "nicht fertig"

P11: **ENDE**